# EUROPEAN PATENT SPECIFICATION

(11) **EP 2 538 273 B1**
(45) Date of publication and mention of the grant of the patent: **26.08.2015**
(21) Application number: 11744712.8
(22) Date of filing: 17.02.2011
(51) Int. Cl.: G03B 33/12, H04N 9/31, G03B 21/20

(54) **PROJECTION DISPLAY DEVICE**
PROJEKTIONSANZEIGEVORRICHTUNG
DISPOSITIF D'AFFICHAGE PAR PROJECTION

(30) Priority: 14.01.2011 JP 2011005607; 19.02.2010 JP 2010034520
(43) Date of publication of application: 26.12.2012
(73) Proprietor: JVC KENWOOD Corporation, Kanagawa 221-0022 (JP)
(72) Inventor: FUKUZAKI, Yoshio, Kanagawa 2210022 (JP)
(74) Representative: Wagner & Geyer
(86) International application number: PCT/JP2011/053410
(87) International publication number: WO 2011/102426

(56) References cited:
- JP-A- 2000 241 769
- JP-A- 2003 255 466
- JP-A- 2005 346 109
- JP-A- 2008 046 479
- JP-A- 2009 087 798
- JP-A- 2009 128 689
- JP-A- 2010 170 989
- US-A1- 2005 024 602
- US-A1- 2010 157 252
- US-A1- 2010 225 885
- US-B1- 6 471 358

## Description

### TECHNICAL FIELD

The present invention relates to a projection-type display device capable of projecting an image having less color unevenness in spite of using a plurality of light sources.

### BACKGROUND ARTS

A projection-type display device is known as an apparatus displaying large-screen images. The projection-type display device is adapted so as to irradiate illumination light from a light source to a liquid crystal display element, thereby projecting an image displayed on the liquid crystal element onto a screen, in enlargement.

In recent years, there have been requirements to change a projection image to a large-screen image and make such a projected image brighter. Therefore, it has been considered to field such requirements by producing high-intensity illumination light entering the liquid crystal display element with use of multiple light sources.

Although the producing of high-intensity illumination light with multiple light sources causes an illuminating device to be complicated with the need of a constitution for synthesizing lights from the light sources, the price per light source is inexpensive with the possibility of using small light sources. An illuminating device capable of irradiating high-intensity illumination light to liquid crystal display elements while using two light sources and a projection-type display device using such an illuminating device are described in Patent Literature No. 1.

In Patent Literature No. 1, the following contents are disclosed generally. Thus, respective light fluxes emitted from two light sources opposed to each other in respective positions where their optic axes coincide with each other are collected to respective reflection surfaces of a triangular prism mirror in an intermediate position between the two light sources by cylindrical lenses, respectively. Then, the light fluxes entering the respective reflection surfaces of the triangular prism mirror are reflected and bent to the incident directions at 90 degrees, both facing in the same direction. In this way, two light fluxes are synthesized and successively emitted in the form of a synthesized light flux. The synthesized light flux emitted from the triangular prism mirror is changed to substantially-parallel light by a cylindrical lens on an optic axis of the prism and successively, the substantially-parallel light enters a dichroic mirror slanted to the optic axis of the two light sources. Upon color separation at the dichroic mirror, the light is reduced in illuminance unevenness by a lens array and subsequently irradiated to the liquid crystal display elements.

Other examples of conventional projection-type displays are disclosed in JP 2009 128 689 A and US 6 471 358 B1.

### PRIOR ART LITERATURES

### PATENT LITERATURES

Patent Literature No. 1: Japanese Patent Publication Laid-open No.2003-255466

### SUMMARY OF THE INVENTION

### PROBLEMS TO BE SOLVED

In the illuminating device described in Patent Literature No. 1, meanwhile, the synthesized light flux formed at the triangular prism mirror has an oval-shaped cross section having optic centers corresponding to two light sources respectively. In the synthesized light flux emitted from the triangular prism mirror to enter the dichroic mirror, the oval-shaped cross section has its long axis whose direction coincides with the slanting direction of the dichroic mirror.

The dichroic mirror composed of multilayer dielectric membranes has a spectroscopic characteristic changeable with a slight angular difference between lights incident on the dichroic mirror. Therefore, the angle entering the dichroic mirror is great in the long axis direction of the oval-shaped cross section of the synthetic light flux, generating fluctuations in the band of wavelength of the light transmitted through and reflected from the dichroic mirror. Consequently, the color unevenness is generated in a cross section of the light flux incident on the liquid crystal display elements, so that an image is projected with color unevenness.

Therefore, an object of the present invention is to provide a projection-type display device which is capable of reducing color unevenness of illumination light whose intensity is increased with use of two light sources and also suppressing an uneven brightness distribution of a projected image thereby to improve its quality.

### SOLUTIONS TO THE PROBLEMS

In order to achieve the above object, the present invention provides a projection-type display device as set forth in claim 1. Further embodiments of the invention are inter alia disclosed in the dependent claims.

### EFFECTS OF THE INVENTION

According to the present invention, it is possible to reduce color unevenness of illumination light whose intensity is increased with use of two light sources and also possible to suppress an uneven brightness distribution of a projected image, improving the quality of the projected image.

### BRIEF DESCRIPTION OF THE DRAWINGS

[Fig. 1] Fig. 1 is a schematic side view showing the constitution of a projection type display device of a first embodiment of the invention.
[Fig. 2] Fig. 2 is a schematic top view of the projection type display device of the first embodiment.
[Fig. 3] Fig. 3 is an explanatory view explaining a flux section of illumination light reflected from a triangular prism mirror 22 of the first embodiment.
[Fig. 4] Fig. 4 is an explanatory view explaining light entering and being reflected from a dichroic mirror of the first embodiment.
[Fig. 5] Fig. 5 is an explanatory view explaining incidence and reflection of light on the dichroic mirror of the first embodiment at a different angle, not part of the invention.
[Fig. 6] Fig. 6 is a diagram showing a relationship between an incident angle and reflectivity of S-polarized light entering the dichroic mirror of the first embodiment.
[Fig. 7] Fig. 7 is a diagram showing a relationship between an incident angles and reflectivity of P-polarized light entering the dichroic mirror of the first embodiment.
[Fig. 8] Fig. 8 is an explanatory view explaining light entering and being reflected from the dichroic mirror of the first embodiment.
[Fig. 9] Fig. 9 is an explanatory view explaining incidence and reflection of light at a different angle with the dichroic mirror of the first embodiment.
[Fig. 10] Fig. 10 is a diagram showing a relationship between a shift angle and an actual incident angle of light entering the dichroic mirror of the first embodiment.
[Fig. 11] Figs. 11 (A) and 11(B) are schematic views showing the arrangement of light sources of the first embodiment.
[Fig. 12] Fig. 12 is a schematic side view showing the constitution of a projection type display device of a second embodiment of the invention.
[Fig. 13] Fig. 13 is a schematic top view showing the constitution of a projection type display device of the second embodiment.

### EMBODIMENTS OF THE INVENTION

Several embodiments of a projection type display device related to the present invention will be described below with reference to the accompanying drawings. Note that, in all the drawings, components having common functions are indicated with the same reference numerals respectively and their overlapping descriptions are eliminated with respect to each component that has been described once.

### <1^{st}. Embodiment>

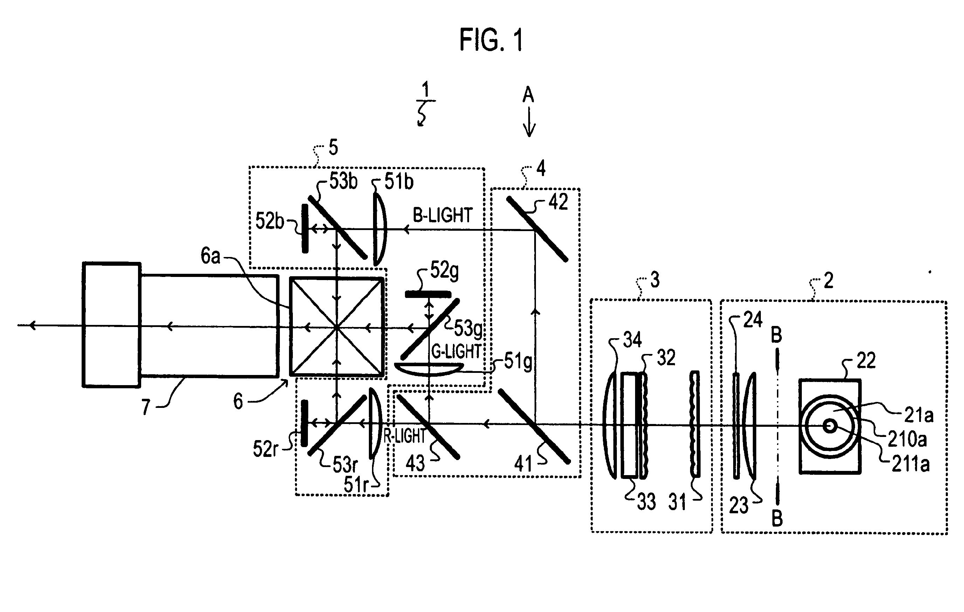

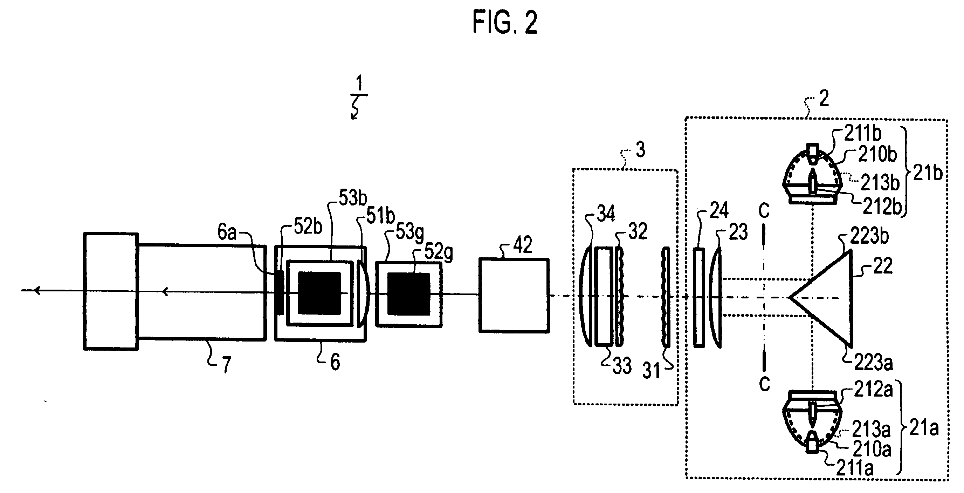

Fig. 1 is a schematic plan view showing the constitution of an optical system of a projection type display device of the first embodiment of the present invention. Note that Fig. 1 is a view obtained by drawing the projection type display device being mounted on an installed table or the like, from a lateral view (in a horizontal direction). Fig. 2 is a schematic plan view showing the constitution of the optical system of the projection type display device of the first embodiment of the present invention, from a view at a different angle from that of Fig. 1. Note that Fig. 2 is a view from a direction of arrow A of Fig. 1, which is also obtained by drawing the projection type display device being mounted on an installed table etc., from a top view (in a vertical direction).

The projection type display device 1 comprises a photosynthetic unit 2 containing two light sources, a polarization conversion unit 3 that uniforms the brightness distribution of light photosynthesized by the photosynthetic unit 2 and converts the light to linearly-polarized light, a color separator 4 that divides the linearly-polarized light into three primary colors' lights, that is, red (R) light, green (G) light and blue (B) light, a light modulating unit 5 that optically modulates incident lights for emission, a color synthesis unit (e.g. cross-dichroic prism) 6 that allows an incision of lights in different wavelength bands and synthesizes the incident lights and a light projecting unit (also called to as "projection lens") 7 that projects incident light in enlargement.

The photosynthetic unit 2 includes two light sources 21a, 21b, a triangular prism mirror 22 for synthesizing lights emitted from the two light sources 21a, 21b, a condenser lens (convex lens) 23 collecting lights emitted from the triangular prism mirror 22 to substantially-parallel light and an ultraviolet light-infrared light (UV/IR) cut filter 24 for removing ultraviolet-band light and infrared-band light from the light emitted from the condenser lens 23.

The polarization conversion unit 3 includes a first lens array 31, a second lens array 32, a polarization conversion element 33 and a condenser lens 34.

The color separator 4 includes a first dichroic mirror 41, a reflection mirror 41 and a second dichroic mirror 43.

The light modulating unit 5 includes field lenses 51 r, 51 g and 51 b, reflection-type liquid crystal display elements 52r, 52g and 52b and reflection-type polarizing plates 53r, 53g and 53b.

The two light sources 21a, 21b are discharge lamps which are known, for instance, as xenon lamps, extra high pressure mercury lamps, metal halide lamps, etc.

Here it is described an example of adopting xenon lamps as the light sources. As shown in Fig. 2, the xenon lamps have double-ends molding (double-end type) lamp structures where transparent quartz luminous tubes are provided, on their both ends, with glass-sealed electrodes 211 a, 211 b, 212a, 212b and also filled up with xenon gas.

In the xenon lamps, since high voltage is impressed in between the positive electrodes 211a, 211b and the negative electrodes 212a, 212b by a not-shown lighting device, discharge paths are formed between the positive electrodes 211a, 211b and the negative electrodes 212a, 212b. Subsequently, respective clearances between the positive electrodes 211a, 211 b and the negative electrodes 212a, 212b are supplied with inrush currents from the lighting device for shifting to arc discharge, so that lights are generated from the light sources 21a, 21 b. Currents are supplied from the lighting device so as to maintain the arc discharge stably.

Then, lights generated between the positive electrodes 211a, 211b and the negative electrodes 212a, 212b become convergent lights by oval reflection mirrors 213a, 213b of the light sources 21a, 21b. Successively, the convergent lights are emitted from the light sources 21a, 21 b, in the form of light fluxes of the illumination lights.

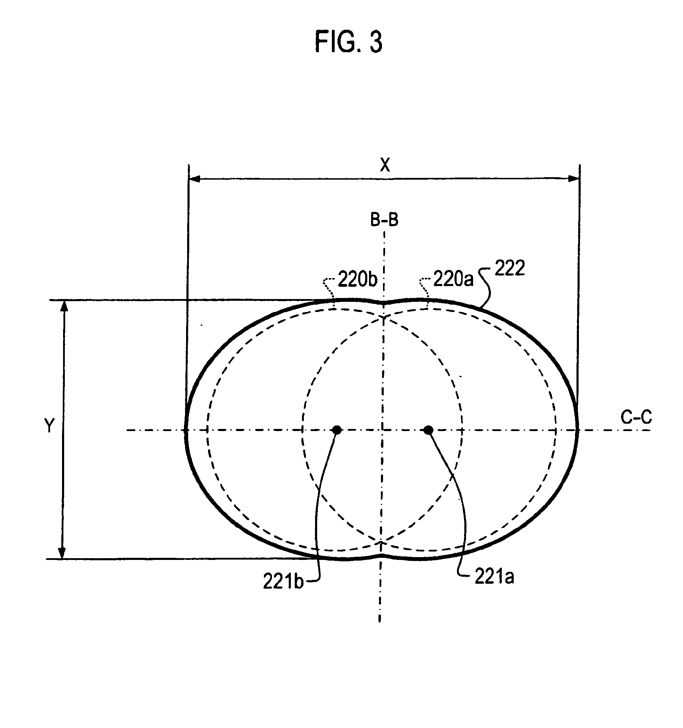

The illumination lights emitted from the light sources 21a, 21b respectively enter two reflection surfaces of the triangular prism mirror 22. The two reflection surfaces of the triangular prism mirror 22 are respectively slanted to the illumination lights emitted from the light sources 21a, 21 b at about 45 degrees so that the lights reflected from the two reflection surfaces point to the substantially-same direction. Due to reflection of the triangular prism mirror 22, respective illumination lights are synthesized as shown in Fig. 3.

Fig. 3 is a view showing the cross section of a flux of the illumination lights reflected from the triangular prism mirror 22, also showing a section along line B-B of Fig. 1 (also a section along a line C-C of Fig. 2) where an upside of Fig. 3 corresponds to a direction of arrow A of Fig. 1.

As an optic center 221a of illumination light 220a emitted from the light source 21a does not coincide with an optic center 221b of illumination light 220b, the cross section of resultant light does not become circular but generally-oval illumination light 222 elongated in the direction of section C-C of Fig. 2, at the reflection on the triangular prism mirror 22.

The substantially-oval shaped illumination light 222 reflected from the triangular prism mirror 22 enters the convex lens 23 to become substantially-parallel light upon refraction.

As for the illumination light emitted from the convex lens 23, its ultraviolet-band light and infrared-band light are reflected or absorbed by a UV/IR cut filter 24, so that visible-band light is transmitted for emission to enter the polarization conversion unit 3.

In both the first lens array 31 and the second lens array 32 of the polarization conversion unit 3, there are small rectangular convex lenses formed in a matrix manner, which are so-called "an integrator optical system" having a characteristics of uniforming the illumination distribution of incident illumination light by a pair of lens arrays.

The illumination light emitted from the UV/IR cut filter 24 enters the first lens array 31, so that the light flux of illumination light is divided into a plurality of rectangular partial light fluxes. Then, the light fluxes emitted from the first lens array 31 enter the second lens array 32 positioned at a focal position of the first lens array 31.

The integrator optical system having the first lens array 31 and the second lens array 32 can make the profile of fluxes emitted from the light sources 21 a, 21 b coincide with the shape of the light modulation element as well as uniform the illuminance of light irradiated on the light modulation element. Therefore, by using the first lens array 31 and the second lens array 32, even if the light fluxes emitted from the light sources 21a, 21b contain either color unevenness or flicker, it is possible to allow an image having significantly-suppressed color unevenness or flicker to be projected on a screen.

Then, the illumination light emitted from the second lens array 32 enters the polarization conversion element 33. The illumination light incident on the polarization conversion element 33 is in an unpolarized condition (also called "random polarization") having no regularity in polarization state.

In the polarization conversion element 33, the incident illumination light is effectively converted to designated linear polarized light for emission since the randomly-polarized illumination light incident on the element is separated into P-polarized light and S-polarized light and successively, the P-polarized light is converted to S-polarized light. A common constitution known in this art may be used for the polarization conversion element 33. The S-polarized illumination light emitted from the polarization conversion element 33 enters the condenser lens 34, in the form of substantially-parallel light.

The S-polarized illumination light emitted from the condenser lens 34 enters the color separator 4. Here, as the photosynthetic direction at the photosynthetic unit 2 and the photo-separating direction at the color separator are perpendicular to each other, the light referred to as "S-polarized light" at the photosynthetic unit 2 will be referred to as "P-polarized light" at the color separator 4 or later. At the color separator 4, the P-polarized illumination light enters the dichroic mirror 41 inclined at 45 degrees to the incident direction at first.

The first dichroic mirror 41 separates the incident P-polarized illumination light into blue (B) light and red-and-green (RG) light. Although the first dichroic mirror 41 in this example has a characteristics of reflecting B-light while transmitting RG-light in the illustrated embodiment, other appropriate constitutions for the first dichroic mirror may be arranged in an opposite case.

As for the resultant B-light from spectroscopy at the first dichroic mirror 41, an optical path of B-light is bent at 90 degrees by a reflection on a reflection mirror 42 inclined at 45 degrees to the incident direction.

In addition, the resultant RG-light from spectroscopy at the first dichroic mirror 41 enters a second dichroic mirror 43 inclined at 45 degrees to the incident direction of the RG-light.

The second dichroic mirror 43 separates the incident P-polarized RG-light into red (R) light and green (G) light. Note that although the second dichroic mirror 43 of this example has a characteristics of reflecting G-light while transmitting R-light, other appropriate constitutions for the second dichroic mirror may be arranged in an opposite case.

The P-polarized B-light reflected from the reflection mirror 42, the P-polarized G-light reflected from the second dichroic mirror 43 and the P-polarized R-light transmitted through the second dichroic mirror 43 enter the light modulating unit 5.

The P-polarized R-light, G-light and B-light incident on the light modulating unit 5 enter field lenses 51r, 51 g, 51b corresponding to respective colors, respectively. Then, these lights are refracted so as to accord with respective display areas of reflection-type liquid crystal display elements 52r, 52g, 52b corresponding to the respective colors. Successively, such refracted lights are transmitted through reflection-type polarizing plates 53r, 53g, 53b, which are slanted at 45 degrees to respective optical paths respectively, to enter the reflection-type liquid crystal display elements 52r, 52g, 52b corresponding to the respective colors.

In the reflection-type liquid crystal display elements 52r, 52g, 52b, drive voltages based on respective image signals for R, G and B colors are impressed on respective liquid quartzes of the reflection-type liquid crystal display element 52r for R-light, the reflection-type liquid crystal display element 52g for G-light and the reflection-type liquid crystal display element 52b for B-light to change respective orientation states of the liquid quartzes, optically modulating these incident lights.

As for these R-light, G-light and B-light respectively reflected and optically modulated by the reflection-type liquid crystal display elements 52r, 52g, 52b, their optical paths are bent at 90 degrees by reflections on the reflection-type polarizing plates 53r, 53g, 53b, respectively. Then, these reflected lights enter the cross-dichroic prism 6 through its surfaces except an emitting surface 6a of the cross-dichroic prism 6, i.e. three incident surfaces, respectively.

In the cross-dichroic prism 6, the incident R-light, G-light and B-light are synthesized and further emitted from the emitting surface 6a. The light emitted from the cross-dichroic prism 6 is enlarged by the projection lens 7 to project an image on a not-shown screen.

As for the triangular prism mirror 22 synthesizing the illumination lights emitted from the light sources 21a, 21b and the first and second dichroic mirrors 41, 43 dividing the synthesized illumination light, their positional relationship is as follows.

As described before, the illumination light synthesized by the triangular prism mirror becomes the substantially-oval shaped illumination light 222 which is elongated in a direction of the light sources 21a, 21b in a view from the reflecting direction of the triangular mirror 22 (i.e. emitting direction of light) while arranging a junction line between two reflection surfaces (223a, 223b of Fig. 2) of the triangular prism mirror 22, as a substantial center. The slanting direction of the first dichroic mirror 41 or the second dichroic mirror 43 is defined so that a long axis direction (i.e. X of Fig. 3) of the oval-shaped illumination light 222 intersects with the slanting direction of the first dichroic mirror 41 or the second dichroic mirror 43 at a right angle.

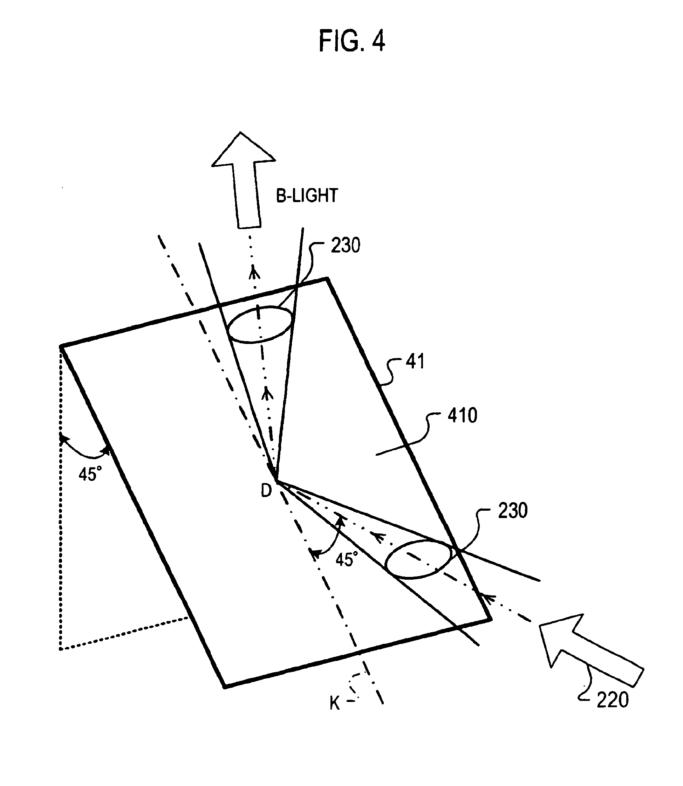

Concretely, the positional relationship between the illumination light 222 and the first dichroic mirror 41 will be described with reference to Fig. 4. Focusing attention on one point (point D) on the side of a boundary surface (also called "color separating surface") 410 of the first dichroic mirror 41, Fig. 4 is an explanatory view showing light incident on the point and light reflected from the point.

In the first dichroic mirror 41, the boundary surface 410 is slanted at 45 degrees to the incident direction of the oval-shaped illumination light 222. In the oval-shaped illumination light 222, therefore, its light component passing through the optical axis enters the first dichroic mirror 41 at an incident angle of 45 degrees.

It is noted here that the light enters the point D from a variety of directions. The profile of a light beam 230 of the light entering the point D from various directions is substantially oval, which is similar to that of the illumination light 222. Corresponding to the oval shape of the illumination light 222, the long axis direction of this light beam intersects with the slanting direction K of the boundary surface 410 of the first dichroic mirror 41 at a right angle.

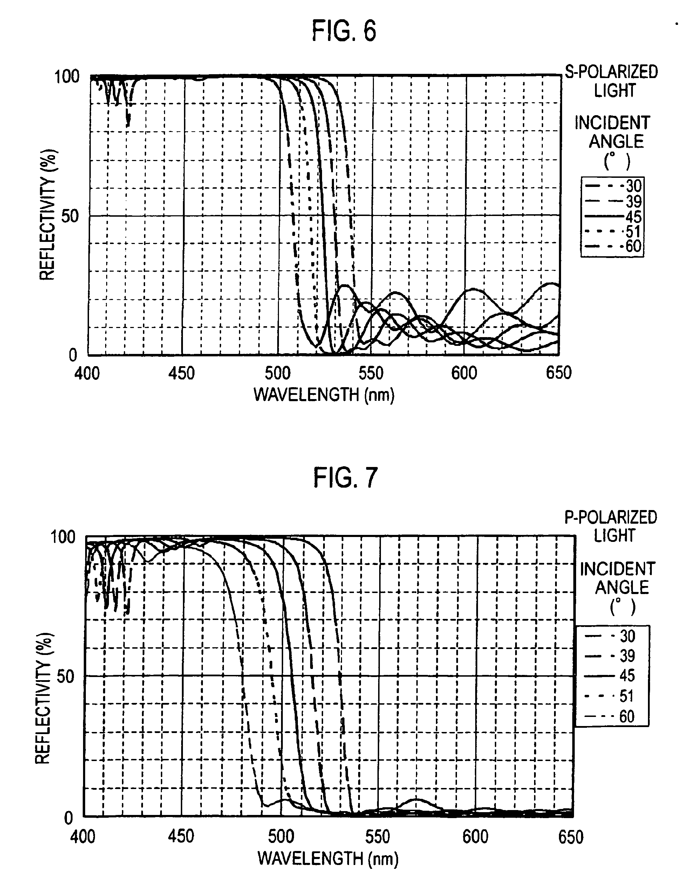

The relationship between an incident angle of light incident on the dichroic mirror and its reflectivity is as shown in Fig. 6. Fig 6 illustrates the angle dependence of reflectivity under an incidence of S-polarized light. As could be understood from Fig. 6, when the incident angle is shifted from 45 degrees smaller, a half value of wavelength is also shifted so as to get a longer value. Here, the half value of wavelength means a wavelength attaining 50% in reflectivity. Thus, when the incident angle is 45 degrees, the half value of wavelength becomes about 520 nm. On the other hand, if the incident angle is shifted from 45 degrees larger, then the half value of wavelength is also shifted so as to get a smaller value. When the incident angle is 30 degrees, the half value of wavelength is about 540 nm. When the incident angle is 60 degrees, the half value of wavelength is about 510 nm. In this way, when the incident angle of light changes, the band of wavelength of the light changes. Similarly, the transmissivity band also changes.

Fig 7 illustrates the angle dependence of reflectivity under an incidence of P-polarized light. In case of P-polarized light, similarly, when the incident angle is shifted from 45 degrees smaller, a half value of wavelength is also shifted so as to get a longer value. Here, the half value of wavelength means a wavelength attaining 50% in reflectivity. Thus, when the incident angle is 45 degrees, the half value of wavelength becomes about 505 nm. On the other hand, if the incident angle is shifted from 45 degrees larger, then the half value of wavelength is also shifted so as to get a smaller value. When the incident angle is 30 degrees, the half value of wavelength is about 530 nm. When the incident angle is 60 degrees, the half value of wavelength is about 480 nm. The unpolarized light would exhibit similar angle dependence as it is thought as a combination of S-polarized light with P-polarized light.

The fact that the band of wavelength of light reflected from or transmitted through the dichroic mirror changes means that wavelengths of lights incident on the refection-type liquid crystal display elements 52r, 52g, 52b do change. That is, the light modulation by these refection-type liquid crystal display elements 52r, 52g, 52b causes a projection image projected from the projection lens 7 to be changed in color (color hue), generating the phenomenon of color unevenness.

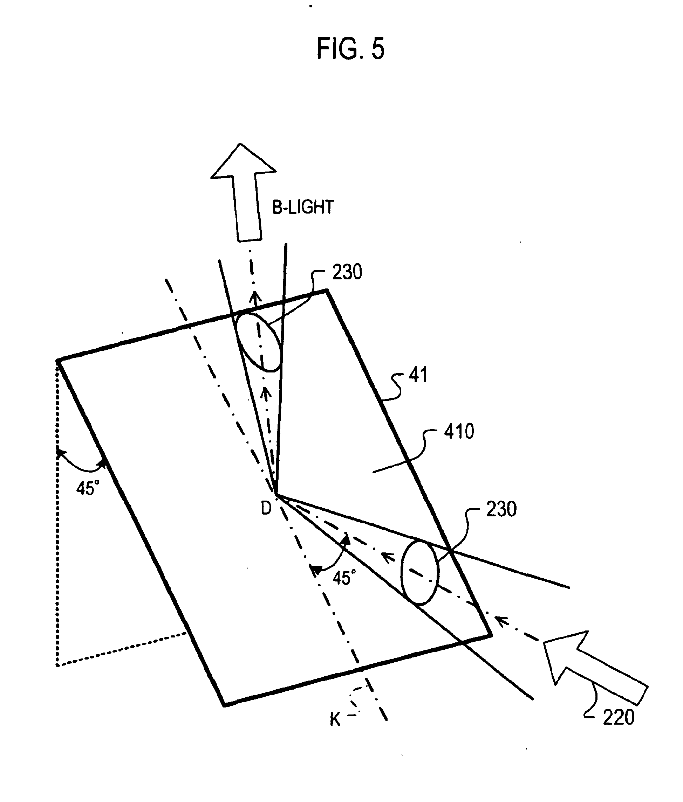

For that reason, it is necessary to make an incident angle of light entering the dichroic mirror narrow. Fig. 5 shows an arrangement not part of the invention where the illustrated angle of light incident on the first dichroic mirror 41 is different from that shown in Fig. 4 by 90 degrees. In case of the arrangement of Fig. 5, the slanting direction K of the boundary surface 410 of the first dichroic mirror 41 becomes parallel to the long axis direction of the light beam 230 of incident light. The fact that the slanting direction K of the boundary surface 410 is parallel to the long axis direction of the light beam 230 means that the light entering the first dichroic mirror 41 varies widely in incident angle.

On the contrary, in the arrangement of Fig. 4 where the synthetic direction of lights emitted from the two light sources 21a, 21b and the spectroscopic direction at the first dichroic mirror 41 intersect with each other at 90 degrees, the fluctuations in the incident angle of light entering the first dichroic mirror 41 get reduced since the slanting direction K and the long axis direction of the light beam 230 intersect with each other at 90 degrees, in other words, the slanting direction K of the boundary surface 410 is parallel to the short axis direction of the light beam 230, as described later.

Consequently, by adopting the arrangement of Fig. 4, it is possible to reduce the color unevenness of a projected image since the change in the band of wavelength of light reflected from or transmitted through the first dichroic mirror 41 is small to reduce the change in hue of the projected image to be projected.

In the arrangement of Fig. 4 where the synthetic direction of lights emitted from the light sources 21 a, 21 b intersects with the spectroscopic direction at the first dichroic mirror 41 at a right angle, the reason of reducing the fluctuation of an incident angle of light entering the first dichroic mirror 41 will be described in detail.

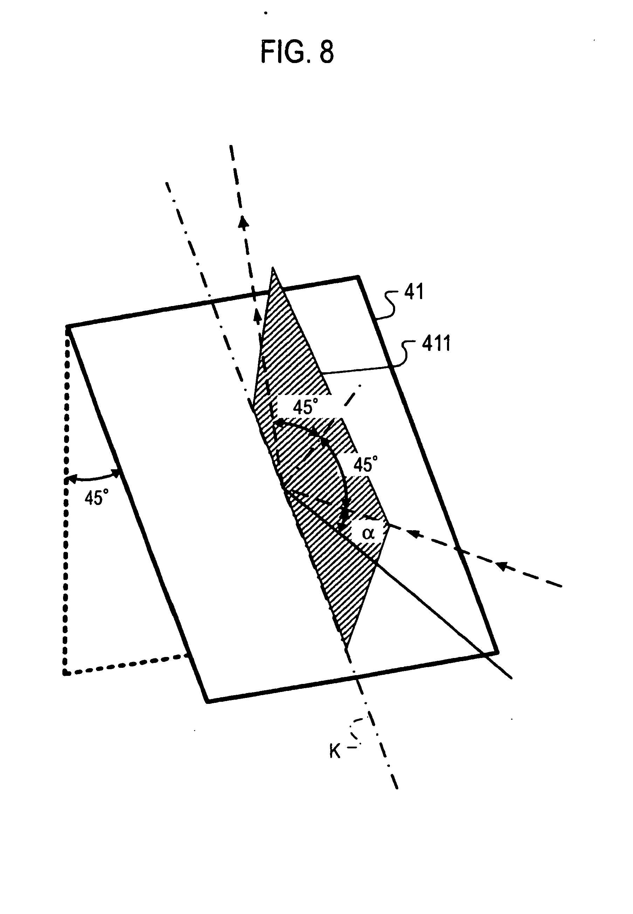

Fig. 8 is an explanatory view to explain light entering and reflecting on the dichroic mirror of the first embodiment. In the figure, respective dash lines designate one optical axis of incidence where light enters the first dichroic mirror 41 at a slant of 45 degrees, which is also slanted at 45 degrees to the incident direction of the light, and another optical axis of the light reflected from the same mirror. In an incident surface 411 (plane defined by a normal line of a boundary surface 410 of the first dichroic mirror 41 and the optical axis of the light entering with the incidence angle of 45 degrees), a solid line designates incident light shifted from the incident light shown with the dash line by a angle.

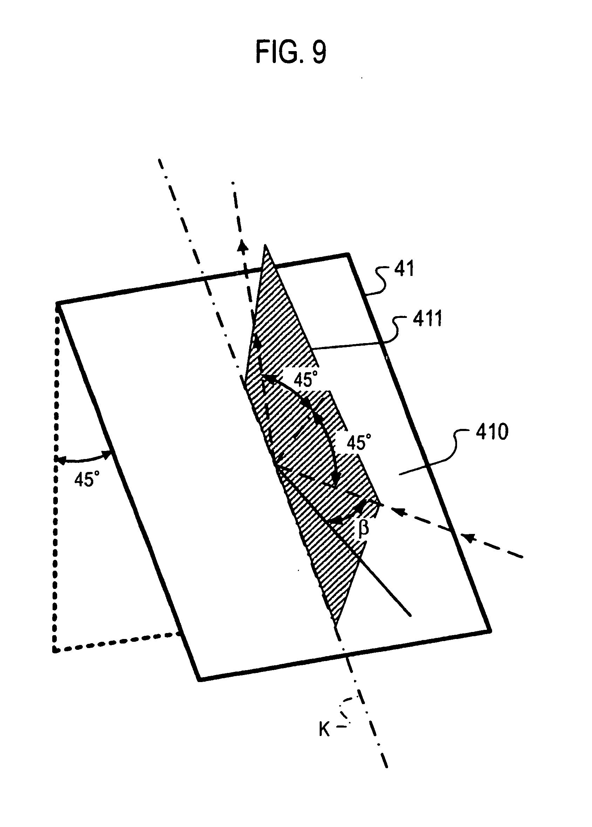

Fig. 9 shows an incidence shifted to a direction perpendicular to the incident surface 411 by a predetermined value. In Fig. 9, respective dash lines designate one optical axis of incidence where light enters the boundary surface 410 of the first dichroic mirror 41 at a slant of 45 degrees, which is also slanted at 45 degrees to the incident direction of the light, and another optical axis of the light reflected from the same mirror. With respect to a direction perpendicular to the incident surface 411, in addition, a solid line designates incident light shifted from the incident light shown with the dash line by β angle.

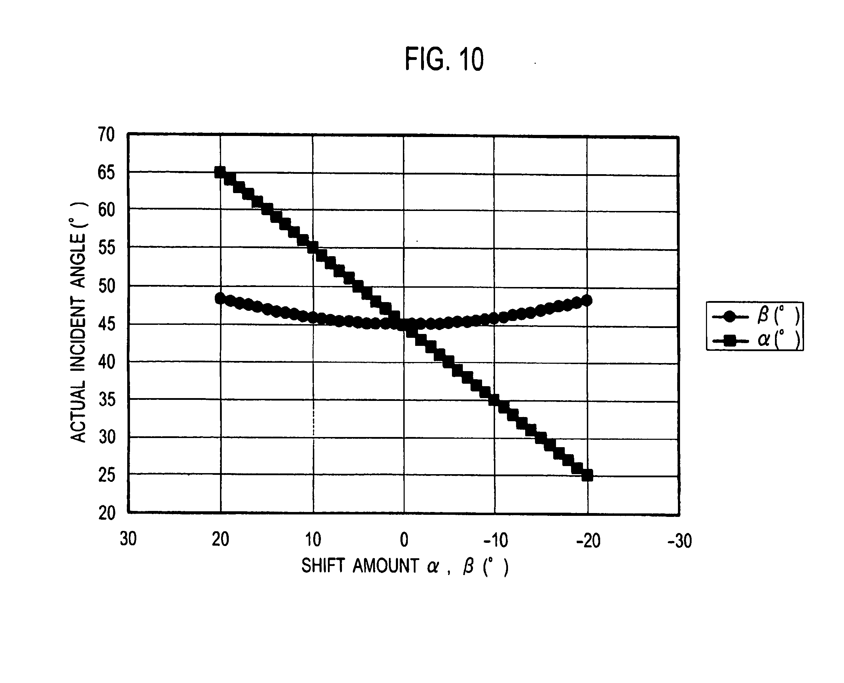

Fig. 10 is a diagram showing the relationship between the shift amount α or β from the angles of incident lights shown with the dash lines in the arrangements of Figs. 8 and 9 and an actual incident angle. Note here that the actual incident angle represents the degree of a shift from the original incident angle of 45 degrees in case of projecting the shift amount α or β on the incident surface 411.

As shown in Fig. 10, if the incidence is shifted from the angle of incident light shown with the dash line in the incident surface 411 by an angle of α degrees, the shift amount and the actual incident angle exhibit a proportional relation. On the other hand, in a plane perpendicular to the surface 411, if the incidence is shifted from the incident light angle shown with the dash line by an angle of β degrees, the actual incident angle becomes less than 50 degrees despite the shift amount β of ± 20 degrees, representing the shift of incident angle less than 5 degrees.

Thus, it can be said that a shifting of the incident beam angle in a plane perpendicular to the incident surface 411 would exert less influence on the actual incident angle. As a consequence, even if the incident beam angle is shifted in a plane perpendicular to the surface 411, the band of wavelength of light reflected from or transmitted through the first dichroic mirror 41 would not change greatly, so that the color change in a resulting projected image is small to allow a reduction of color shading.

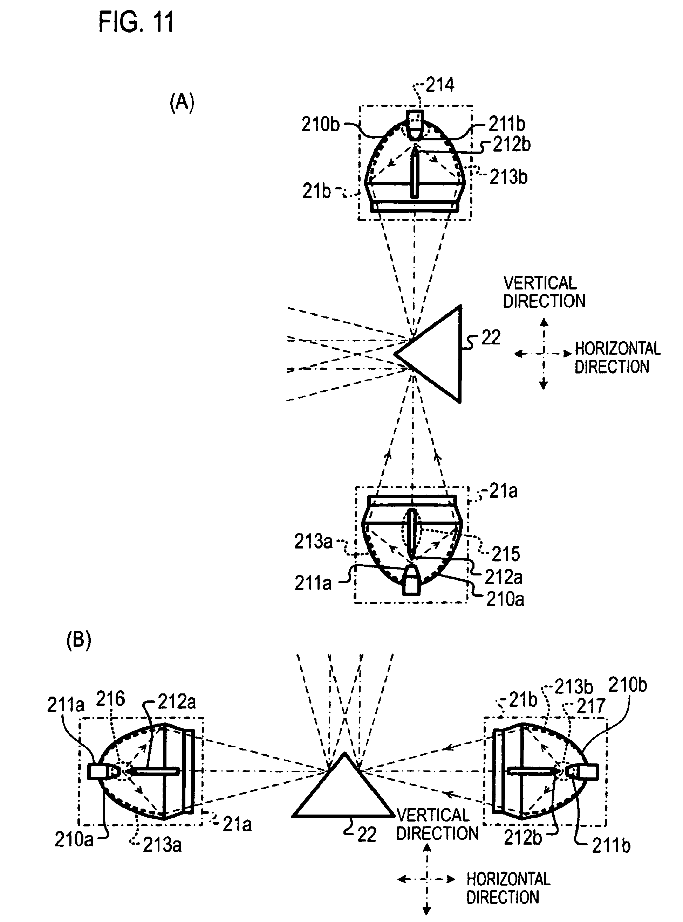

Next, the arrangements of the light sources 21 a, 21b for the constitution of Fig. 4 will be explained. Fig. 11(A) illustrates one arrangement where the light sources 21a, 21b are opposed to each other in the vertical direction, while Fig. 11(B) illustrates another arrangement where the light sources 21a, 21b are opposed to each other in the horizontal direction. In addition, Figs. 11(A) and 11(B) are illustrated with dash-line circles representing areas heated at maximum temperatures respectively.

In Fig. 11(A), the light sources 21a, 21b are arranged so as to oppose each other about the triangular prism mirror 22 as a center, in a direction where the light source 21a, 21b are juxtaposed to each other in the vertical direction.

In the arrangement to dispose the light sources 21a, 21b in the vertical direction, the light source 21 a on the lower side has a high-temperature area 215 closer to the triangular prism mirror 22. While, the light source 21 b on the upper side has a high-temperature area 214 farther away from the triangular prism mirror 22. In this way, there is a difference in the position of a high-temperature area between the light source 21a and the light source 21b, causing a difference in the interior temperature distribution between the light source 21 a and the light source 21b. Thus, such a difference produces a difference in brightness between the illumination light emitted from the light source 21a and the illumination light emitted from the light source 21 b.

In Fig. 11 (B), meanwhile, the light sources 21a, 21b are arranged so as to oppose each other about the triangular prism mirror 22 as a center, in a direction where the light source 21a, 21 b are juxtaposed to each other in the horizontal direction.

In the arrangement to dispose the light sources 21a, 21b in the horizontal, the light sources 21a, 21b have two highest-temperature areas 216, 217 each positioned between two electrodes (211a and 212a; 211 b and 212b), so that the temperature distributions of the light sources 21a, 21b become symmetrical with respect to the triangular prism mirror 22 as a symmetry center, confirming the interior temperature distribution between the light source 21a and the light source 21b. Thus, the brightness of the illumination light emitted from the light source 21a becomes substantially similar to the brightness of the illumination light emitted from the light source 21 b.

As mentioned above, if arranging the light sources 21a, 21b in the horizontal direction as well as making the synthetic direction of lights emitted from light sources 21a, 21b perpendicular to the spectroscopic direction at the first dichroic mirror 41, then it is possible to obtain a projected image having a reduced color unevenness at the color separator 4 and a brightness unevenness at the photosynthetic unit 2.

### <2^{nd}. Embodiment>

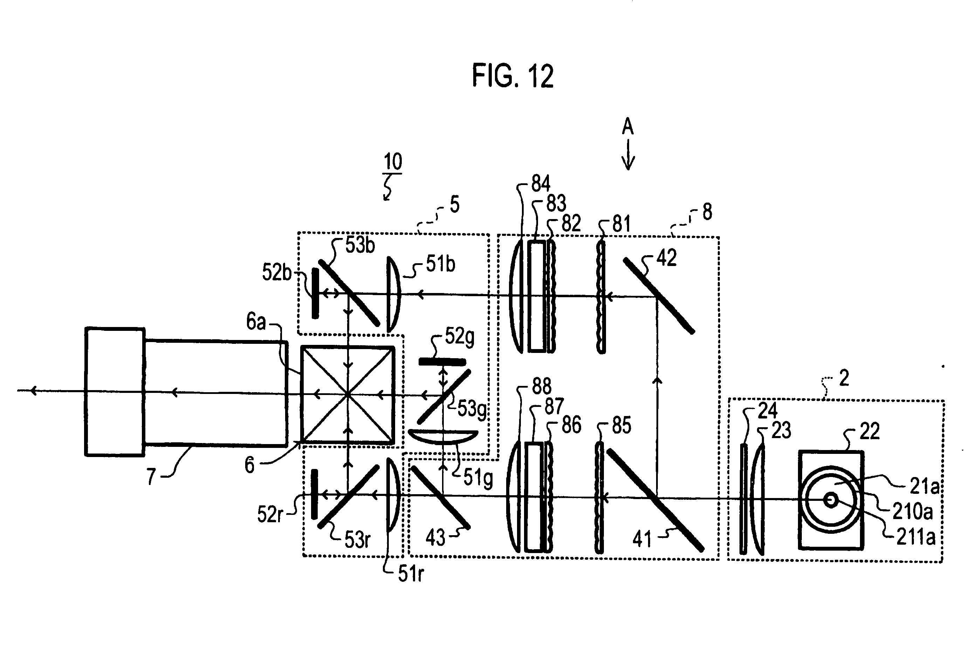

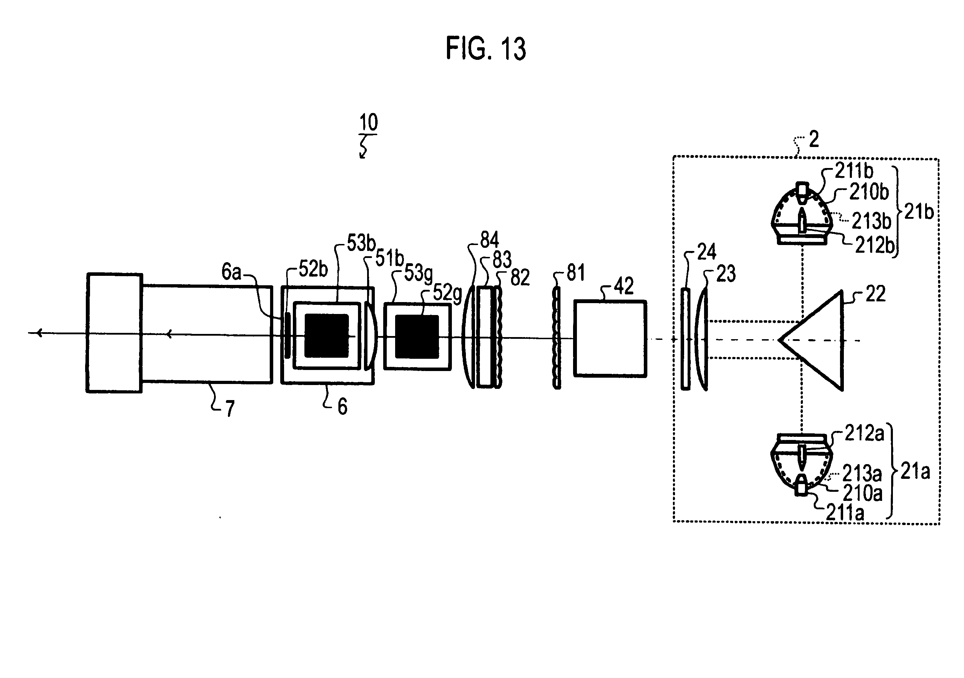

Next, the second embodiment which differs from the first embodiment with respect to the position of a polarization conversion element will be described. Fig. 12 is a schematic plan view showing the constitution of an optical system of a projection type display device of the second embodiment of the present invention. Note that Fig. 12 is a view obtained by drawing the projection type display device being mounted on an installed table or the like, from a lateral view (in a horizontal direction). Fig. 13 is a schematic plan view showing the constitution of the optical system of the projection type display device of the second embodiment of the present invention, from a view at a different angle from that of Fig. 12. Note that Fig. 13 is a view from a direction of arrow A of Fig. 12, which is also obtained by drawing the projection type display device being mounted on an installed table etc., from a top view (in a vertical direction). In Fig. 12 and Fig. 13, constituents similar to those of Figs. 1 and 2 are indicated with the same reference numerals, respectively.

The projection type display device 10 comprises a photosynthetic unit 2 containing two light sources, a color separator 8 that separates light photosynthesized by the photosynthetic unit 2 into three primary colors' lights, that is, red (R) light, green (G) light and blue (B) light, uniforms the brightness distribution of the lights and converts the lights to linear-polarized lights, a light modulating unit 5 that emits incident lights upon light modulation, a color synthesis unit (e.g. cross-dichroic prism) 6 that synthesizes the incident lights and a light projecting unit (also called "projection lens") 7 that projects incident light in enlargement.

As the photosynthetic unit 2, the light modulating unit 5, the color synthesis unit 6 and the light projecting unit 7 are similar to those of the first embodiment, the color separator 8 will be described below.

The color separator 8 includes a first dichroic mirror 41, a reflection mirror 42, a second dichroic mirror 43, a first lens array 81, a second lens array 82, a first polarization conversion element 83, a first condenser lens 84, a third lens array 85, a fourth lens array 86

The illumination light emitted from the photosynthetic unit 2enters the color separator 8. In the color separator 8, the illumination light enters the first dichroic mirror 41 slanted at 45 degrees to the incident direction, at first.

The first dichroic mirror 41 divides the incident illumination light into blue (B) light and red-and-green (RG) light. Although the first dichroic mirror 41 of this example has a characteristics of reflecting B-light while transmitting RG-light, other appropriate constitutions for the first dichroic mirror may be arranged in an opposite case.

As for the resultant B-light from spectroscopy at the first dichroic mirror 41, its optical path is bent at 90 degrees by a reflection on the reflection mirror 42 inclined at 45 degrees to the incident direction.

The B-light reflected from the reflection mirror 42 enters the first lens array 81, so that the light flux of illumination light is divided into a plurality of rectangular partial light fluxes. Then, the light fluxes emitted from the first lens array 81 enter the second lens array 82 positioned at a focal position of the first lens array 81.

The integrator optical system having the first lens array 81 and the second lens array 82 can make the profile of fluxes emitted from the light sources 21 a, 21 b coincide with the shape of the light modulation element as well as uniform the illuminance of light irradiated on the light modulation element. Therefore, by using the first lens array 81 and the second lens array 82, even if the light fluxes emitted from the light sources 21 a, 21 b contain either color unevenness or flicker, it is possible to allow an image having significantly-suppressed color unevenness or flicker to be projected on a screen.

Then, the illumination light emitted from the second lens array 82 enters the polarization conversion element 83. The illumination light incident on the polarization conversion element 83 is in an unpolarized condition (also called "random polarization") having no regularity in polarization state.

In the polarization conversion element 83, the incident illumination light is effectively converted to designated linear polarized light for emission since the randomly-polarized illumination light incident on the element is separated into P-polarized light and S-polarized light and successively, the S-polarized light is converted to P-polarized light. A common constitution known in this art may be used for the polarization conversion element 83. The P-polarized illumination light emitted from the polarization conversion element 83 enters the condenser lens 84, in the form of substantially-parallel light, and subsequently enters the light modulating unit 5.

In the resultant RG-light from spectroscopy at the first dichroic mirror 81, the illuminance distribution of illumination light is uniformalized by the third lens array 85, the fourth lens array 86, a second polarization conversion element 87 and a second condenser lens 88, which are similar in constitution to the above case of B-light. Simultaneously, the illumination light is converted to P-polarized and linearly-polarized light for substantially-parallel light

The P-polarized illumination light emitted from the second condenser lens 88 enters the second dichroic mirror 43 inclined at 45 degrees to the incident direction of the light.

By the second dichroic mirror 43, the incident S-polarized RG-light is divided into red (R) light and green (G) light, so that these lights successively enter the light modulating unit 5 respectively.

The second embodiment is identical to the first embodiment in that the synthetic direction of lights emitted from the light sources 21 a, 21 b intersects with the spectroscopic direction at the first dichroic mirror 41 at a right angle. However, the second embodiment differs from the first embodiment in that the illumination light incident on the first dichroic mirror 81 is unpolarized light.

Under condition that the unpolarized light enters the first dichroic mirror 81, the reflectivity or transmissivity of reflected or transmitted light is similar to that of linearly-polarized light. That is, also in case of unpolarized light, the waveband of reflectivity or transmissivity changes depending on an incident angle.

Therefore, as mentioned above, with the provision of a constitution where the synthetic direction of lights emitted from the light sources 21a, 2 1 b intersects with the spectroscopic direction at the first dichroic mirror 41 at a right angle, it is possible to reduce color unevenness of a resultant projected image.

Note that, in common with the first embodiment and the second embodiment, it has been described that the light sources 21a, 21b are arranged so that respective emission ports of the illumination lights 220a, 220b are opposed to each other. Needless to say, however, all you have to do is to allow the illumination lights 220a, 220b to be both reflected to an identical direction despite their incidences on the triangular prism mirror 22 from different directions.

### INDUSTRIAL APPLICABILITY

As mentioned above, according to the present invention, it is possible to be provided a projection-type display device that reduces color unevenness of illumination light in spite of a plurality of light sources to increase the light intensity of illumination light, so that uneven brightness distribution is suppressed to improve the quality of a projected image.

### REFERENCE SIGNS LIST

- 1, 10: Projection-type Display Device
- 2: Photosynthetic Unit
- 3: Polarization Conversion Unit
- 4: Color Separator
- 5: Light Modulating Unit
- 6: Color Synthesis Unit (Cross-Dichroic Prism)
- 7: Light Projecting Unit (Projection Lens)
- 21a, 21b: Light Sources
- 22: Triangular Prism Mirror
- 23: Condenser Lens (Convex Lens)
- 24: Ultraviolet Light-Infrared Light (UV/IR) Cut Filter
- 31: First Lens Array
- 32: Second Lens Array
- 33: Polarization Conversion Element
- 34: Condenser Lens
- 41: First Dichroic Mirror
- 42: Reflection Mirror
- 43: Second Dichroic Mirror
- 51r, 51g, 51b: Field Lenses
- 52r, 52g, 52b: Reflection-type Liquid Crystal Display Elements
- 53r, 53g, 53b: Reflection-type Polarizing Plates
- 210a, 210b: Transparent Quartz Luminous Tubes
- 211a, 211b: Positive Electrodes
- 212a, 212b: Negative Electrodes
- 213a, 213b: Oval Reflection Mirrors
- 81: First Lens Array
- 82: Second Lens Array
- 83: First Polarization Conversion Element
- 84: First Condenser Lens
- 85: Third Lens Array
- 86: Fourth Lens Array
- 87: Second Polarization Conversion Element
- 88: Second Condenser Lens

## Claims

1. A projection-type display device (1;10) comprising:
two light sources (21a, 21b) arranged oppositely to each other on a line and arranged so as to emit illumination lights (220a, 220b) in opposed directions from each other;
a photosynthetic unit (2) arranged in one intermediate position on said line, the photosynthetic unit (2) being configured to reflect the illumination lights (220a, 220b) emitted from the two light sources (21a, 21b), received on two reflection parts (223a, 223b) in one direction thereby synthesizing and emitting the illumination lights (220a, 220b) to a single light flux;
a color separator (4) configured to divide at a color separating surface (410) the single light flux synthesized by the photosynthetic unit (2), and to emit respective color lights having different wavelengths respectively;
a light modulating unit (5) configured to optically modulate the respective color lights divided by the color separator (4), based on video signals and to emit the respective color lights as modulated lights of respective colors;
a color synthesis unit (6) configured to synthesize the modulated lights of respective colors optically modulated by the light modulating unit (5) respectively and to emit the modulated lights as image light; and
a light projecting unit (7) configured to project the image light synthesized by the color synthesis unit (6), in enlargement, wherein
the single light flux synthesized by the photosynthetic unit (2) has a cross section shaped so that a length of a first axis along the direction of the line is longer than a length of a second axis along a direction perpendicular to the direction of the first axis,
the color separating surface (410) of the color separator (4) is slanted to an optic axis of the single light flux at a predetermined angle, and
the color separator (4) is arranged with respect to the two light sources (21a, 2 1 b) so that the slanting direction (K) of its color separating surface (410) extends at a right angle to the projection on the color separating surface of the line on which the two light sources (21a, 21b) are arranged and to the first axis of the single light flux.

2. The projection-type display device (1) of claim 1, further comprising a polarization conversion unit (3) configured to convert the illumination lights reflected by the photosynthetic unit (2) to linearly-polarized light having a designated polarizing axis, wherein
the linearly-polarized light having the designated polarizing axis enters the color separator (4).

3. The projection-type display device (1; 10) of claim 1 or 2, wherein
the light sources (21a, 21b) are arranged so that the optic axes (221a, 221b) of the illumination lights emitted (220a, 220b) from the light sources (21a, 21b) are in a horizontal plane, and
the color separator (4) is arranged so that the color separating surface (410) of the color separator (4) is slanted at 45 degrees to a vertical direction.

4. The projection-type display device (1; 10) of any one of claims 1 to 3, wherein the two light sources (21a, 21b) are arranged so that respective emission ports emitting the illumination lights (220a, 220b) are opposed to each other.

## Patentansprüche

1. Projektionsanzeigevorrichtung (1; 10) die folgendes aufweist:
zwei Lichtquellen (21 a, 21 b) einander gegenüber in einer Linie angeordnet und angeordnet, um Beleuchtungslichter (220a, 220b) in zueinander entgegengesetzten Richtungen zu emittieren;
eine Photosyntheseeinheit (2), in einer Zwischenposition auf der Linie angeordnet, wobei die Photosyntheseeinheit (2) konfiguriert ist, um die Beleuchtungslichter (220a, 220b), die von den zwei Lichtquellen (21 a, 21 b) emittiert wurden, und auf zwei Reflexionsteilen (223a, 223b) aufgenommen wurden, in einer Richtung zu reflektieren, wodurch die Beleuchtungslichter (220a, 220b) zu einem einzigen Lichtfluss synthetisiert und emittiert werden;
ein Farbtrennungsgerät (4), konfiguriert, um an einer Farbtrennfläche (410), den einzigen Lichtfluss, synthetisiert durch die Photosyntheseeinheit (2), zu teilen und um Lichter mit jeweiligen Farben mit verschiedenen Wellenlängen zu emittieren;
eine Lichtmodulationseinheit (5) konfiguriert, um optisch die Lichter mit jeweiligen Farben, welche durch das Farbtrennungsgerät (4) getrennt wurden, basierend auf Videosignalen zu modulieren, und um die Lichter mit jeweiligen Farben als modulierte Lichter jeweiligen Farben zu emittieren;
eine Farbsyntheseeinheit (6) konfiguriert, um die modulierten Lichter jeweiliger Farben zu synthetisieren, welche optisch jeweils durch die Lichtmodulationseinheit (5) moduliert wurden, und um die modulierten Lichter als Bildlicht zu emittieren; und
eine Lichtprojektionseinheit (7) konfiguriert, um das Bildlicht, synthetisiert durch die Farbsyntheseeinheit (6), in Vergrößerung zu projizieren, wobei der einzige Lichtfluss synthetisiert durch die Photosyntheseeinheit (2) einen Querschnitt aufweist, so geformt, dass eine Länge von einer ersten Achse entlang der Richtung der Linie länger ist, als eine Länge einer zweiten Achse entlang einer Richtung, senkrecht zu der Richtung der ersten Achse;
die Farbtrennfläche (410) des Farbtrennungsgeräts (4) in einem vorbestimmten Winkel zu einer optischen Achse des einzigen Lichtflusses geneigt ist, und das Farbtrennungsgerät (4) bezüglich der zwei Lichtquellen (21 a, 21 b) so angeordnet ist, dass die Neigungsrichtung (K) von seiner Farbtrennfläche (410) im rechten Winkel zu der Projektion auf der Farbtrennfläche der Linie auf welcher die zwei Lichtquellen (21 a, 21 b) angeordnet sind, und zu der ersten Achse des einzigen Lichtflusses, verläuft.

2. Projektionsanzeigevorrichtung (1) gemäß Anspruch 1, die weiterhin eine Polarisationsumwandlungseinheit (3) aufweist, konfiguriert, um die Beleuchtungslichter, welche durch die Photosyntheseeinheit (2) reflektiert wurden, in linear-polarisiertes Licht mit einer bestimmten Polarisationsachse zu konvertieren, wobei das linear-polarisierte Licht mit der bestimmten Polarisationsachse in das Farbtrennungsgerät (4) eintritt.

3. Projektionsanzeigevorrichtung (1; 10) gemäß Anspruch 1 oder 2, wobei die Lichtquellen (21 a, 21 b) so angeordnet sind, dass die optischen Achsen (221 a, 221 b) der Beleuchtungslichter (220a, 220b), emittiert von den Lichtquellen (21 a, 21 b), in horizontaler Ebene sind und das Farbtrennungsgerät (4) so angeordnet ist, dass die Farbtrennfläche (410) des Farbtrennungsgeräts (4) 45 Grad zu einer vertikalen Richtung geneigt ist.

4. Projektionsanzeigevorrichtung (1; 10) gemäß einem der Ansprüche 1 bis 3, wobei die zwei Lichtquellen (21 a, 21 b) so angeordnet sind, dass jeweilige Emissionsauslässe, welche die Beleuchtungslichter (220a, 220b) emittieren, einander gegenüber liegen.

## Revendications

1. Dispositif d'affichage par projection (1 ; 10) comprenant :
deux sources lumineuses (21a, 21b) agencées de façon mutuellement opposée sur une ligne et agencées pour émettre des faisceaux d'illumination (220a, 220b) de directions mutuellement opposées ;
un module de synthèse lumineuse (2) disposé à une position intermédiaire sur ladite ligne, le module de synthèse lumineuse (2) étant agencé pour réfléchir les faisceaux d'illumination (220a, 220b) émis à partir des deux sources lumineuses (21a, 21b) reçus sur deux parties réflectrices (223a, 223b) dans une première direction, synthétisant et émettant ainsi les faisceaux d'illumination (220a, 220b) en un flux lumineux unique ;
un séparateur de couleur (4) agencé pour diviser au niveau d'une surface de séparation de couleur (410) le flux lumineux unique synthétisé par le module de synthèse lumineuse (2) et à émettre des faisceaux colorés respectifs ayant des longueurs d'onde différentes, respectivement ;
un module de modulation de lumière (5) agencé pour moduler optiquement les faisceaux de couleur respectifs divisés par le séparateur de couleur (4) sur la base de signaux vidéos et pour émettre les faisceaux de couleur respectifs en tant que faisceaux modulés de couleurs respectives ;
un module de synthèse de couleur (6) agencé pour synthétiser les faisceaux modulés de couleurs respectives modulés optiquement par le module de modulation de lumière (5) respectivement et pour émettre les faisceaux modulés en tant que faisceau image ; et
un module de projection de lumière (7) agencé pour projeter le faisceau image synthétisé par le module de synthèse de couleur (6), en agrandissement, dans lequel :
le flux lumineux unique synthétisé par le module de synthèse lumineuse (2) a une section conformée pour que la longueur d'un premier axe selon la direction de ladite ligne soit supérieure à la longueur d'un second axe dans une direction perpendiculaire à la direction du premier axe ;
la surface de séparation de couleur (410) du séparateur du couleur (4) est oblique par rapport à l'axe optique du flux lumineux unique, selon un angle prédéterminé ; et
le séparateur de couleur (4) est agencé par rapport aux deux sources lumineuses (21a, 21b) pour que la direction d'inclinaison (K) de sa surface de séparation de couleur (410) s'étende orthogonalement à la projection sur la surface de séparation de couleur de la ligne sur laquelle les deux sources lumineuses (21a, 21b) sont agencées et du premier axe du flux lumineux unique.

2. Dispositif d'affichage par projection (1) selon la revendication 1, comprenant en outre un module de conversion de polarisation (3) agencé pour convertir les faisceaux d'illumination réfléchis par le module de synthèse lumineuse (2) en un faisceau à polarisation rectiligne ayant d'un axe de polarisation désigné, dans lequel :
la lumière polarisée rectiligne ayant l'axe de polarisation désigné entre dans le séparateur de couleur (4).

3. Dispositif d'affichage par projection (1 ; 10) selon la revendication 1 ou 2, dans lequel :
les sources lumineuses (21a, 21b) sont agencées de sorte que les axes optiques (221a, 221b) des faisceaux d'illumination (220a, 220b) émis à partir des sources lumineuses (21a, 21b) sont dans un plan horizontal, et
le séparateur de couleur (4) est agencé de sorte que la surface de séparation de couleur (410) du séparateur de couleur (4) est inclinée à 45° par rapport à une direction verticale.

4. Dispositif d'affichage par projection (1 ; 10) selon l'une quelconque des revendications 1 à 3, dans lequel les deux sources lumineuses (21a, 21b) sont agencées de sorte que les accès d'émission respectifs émettant les faisceaux d'illumination (220a, 220b) sont mutuellement opposés.
